# EUROPÄISCHE PATENTSCHRIFT

(11) **EP 2 148 565 B1**
(45) Veröffentlichungstag und Bekanntmachung des Hinweises auf die Patenterteilung: **14.08.2013**
(21) Anmeldenummer: 08716273.1
(22) Anmeldetag: 05.03.2008
(51) Int. Cl.: A01N 1/02, B01L 3/00, G06K 7/00, G01N 35/00

(54) **KRYOSPEICHEREINRICHTUNG, KRYOKONSERVIERUNGSVORRICHTUNG UND VERFAHREN ZU DEREN BETRIEB**
CRYOSTORAGE UNIT, CRYOPRESERVATION DEVICE AND METHOD FOR OPERATING THE SAME
DISPOSITIF DE STOCKAGE CRYOGENIQUE, DISPOSITIF DE CONSERVATION CRYOGENIQUE ET PROCEDE D'UTILISATION DE CEUX-CI

(30) Priorität: 30.05.2007 DE 102007025091
(43) Veröffentlichungstag der Anmeldung: 03.02.2010
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko, 66386 St. Ingbert (DE); MÖLLER, Michael, 58456 Witten (DE); IHMIG, Frank, 66280 Sulzbach (DE)
(74) Vertreter: Hertz, Oliver
(86) Internationale Anmeldenummer: PCT/EP2008/001756
(87) Internationale Veröffentlichungsnummer: WO 2008/145209

(56) Entgegenhaltungen:
- WO-A-2007/147531
- DE-A1- 10 060 889
- DE-A1- 10 202 304
- F.R.IHMIG ET AL.: "Cryogenic electronic memory infrastructure for physically related "continuity of care records" of frozen cells" CRYOGENICS, Bd. 46, 2006, Seiten 312-320, XP002432578 GBBUTTERWORTH SCIENTIFIC, GUILDFORD

## Beschreibung

Die Erfindung betrifft eine Speichereinrichtung, die zur Datenspeicherung in einer Tieftemperaturumgebung eingerichtet ist, insbesondere mit einem Probendatenspeicher, der in einer Tieftemperaturumgebung angeordnet ist, eine Kryokonservierungsvorrichtung, die zur Kryokonservierung biologischer Proben eingerichtet und mit einer derartigen Speichereinrichtung ausgestattet ist, und Verfahren zu deren Betrieb.

Die Kryokonservierung biologischer Proben mit einer Probenlagerung bei tiefen Temperaturen, z. B. im Bereich von -130°C bis -196°C hat zahlreiche Anwendungen in den Biowissenschaften und der Biotechnologie. Beispielsweise werden biologische Zellen im kryokonservierten Zustand für Anwendungen in der regenerativen Medizin, z. B. dem so genannten Tissue Engineering, Stammzelltherapien und Zelltransplantationen bereitgehalten. Die Lagerung (Speicherung) biologischer Proben erfolgt in Verbindung mit zugehörigen Probendaten, die z. B. eine Identifizierungsinformation oder weitere Informationen über Probeneigenschaften umfassen. Um eine hohe Sicherheit der Zuordnung von Probendaten zu den Proben zu gewährleisten, werden die Probendaten in Probendatenspeichern in engem räumlichen Zusammenhang mit den zugehörigen Proben gespeichert. Die Probendatenspeicher werden gemeinsam mit den Proben bei den tiefen Temperaturen gelagert.

Die Kryokonservierung erfordert nicht nur eine Datenhaltung während der Probenlagerung in einem Probentank, sondern auch eine Kommunikation mit den Probendatenspeichern, z. B. zum Informationsaustausch (Daten-Backup, Daten-Update, Integritätstests). Für diesen Zweck ist innerhalb des Kryotanks eine Datenverarbeitungseinrichtung vorgesehen, die Probendaten verarbeitet und mit einer Steuerung außerhalb des Kryotanks kommuniziert. Der Betrieb der Datenverarbeitungseinrichtung erfordert eine Verbindung mit einer Energieversorgung.

In DE 100 60 889 A1 (und entsprechend US 2004/0065093 A1) wird vorgeschlagen, als Datenverarbeitungseinrichtung einen integrierten Schaltkreis zu verwenden, der den Probendatenspeicher enthält und in dessen Gehäuse eine Probenaufnahme für die biologische Probe vorgesehen ist. Zur Übertragung von Probendaten von oder zu dem integrierten Schaltkreis können Lichtleiterverbindungen vorgesehen sein. Zur Verbindung der integrierten Schaltkreise mit einer Energieversorgung außerhalb des Kryotanks sind elektrische Leitungsverbindungen vorgesehen.

Die Überwindung des Temperaturgradienten von über 200 K vom Inneren des Kryotanks zu dessen Umgebung stellt ein Problem dar, da die elektrischen Leitungsverbindungen thermische Verluste verursachen. Thermische Verluste führen zu einem erhöhten Kühlmittelverbrauch, was insbesondere unter Berücksichtigung der gegebenenfalls großen Anzahl von Datenverarbeitungseinrichtungen und der hohen Lagerzeit von Monaten, Jahren der Jahrzehnten ein kritisches Problem der herkömmlichen Kryokonservierungstechnik darstellt.

Die Aufgabe der Erfindung ist es, eine verbesserte Speichereinrichtung zur Speicherung von Probendaten bei tiefen Temperaturen und ein verbessertes Verfahren zum Betrieb der Speichereinrichtung bereitzustellen, mit denen Nachteile der herkömmlichen Kryokonservierungstechnik vermieden werden und die insbesondere eine Verminderung thermischer Verluste ermöglichen. Die Aufgabe der Erfindung ist es auch, eine verbesserte Kryokonservierungsvorrichtung und ein Verfahren zu deren Betrieb bereitzustellen.

Diese Aufgaben werden durch Vorrichtungen und Verfahren mit der Merkmalen der unabhängigen Ansprüche gelöst. Vorteilhafte Ausführungsformen und Anwendungen der Erfindung ergeben sich aus den abhängigen Ansprüchen.

Vorrichtungsbezogen beruht die Erfindung gemäß einem ersten Gesichtspunkt auf der allgemeinen technischen Lehre, eine Kryospeichereinrichtung zur Speicherung von Probendaten in einer Tieftemperaturumgebung bereitzustellen, bei der eine Lichtleitereinrichtung mit einer opto-elektrischen Wandlereinrichtung vorgesehen ist, die mit einer Datenverarbeitungseinrichtung zur Verarbeitung der Probendaten und/oder einer Energiespeichereinrichtung koppelbar ist, mit der elektrische Energie speicherbar ist. Vorteilhafterweise ermöglicht die Lichtleitereinrichtung sowohl eine Datenkommunikation der Datenverarbeitungseinrichtung als auch eine Energieversorgung der Kryospeichereinrichtung. Erfindungsgemäß wird ein gemeinsamer Transportweg für Probendaten und Energie geschaffen. Die Verbindung der Kryospeichereinrichtung mit weiteren Geräten, insbesondere mit einer Energieversorgungseinrichtung außerhalb der Tieftemperaturumgebung ist frei von elektrischen, insbesondere metallischen Leitern. Die Lichtleitereinrichtung weist eine geringere Wärmeleitfähigkeit als elektrische Leiter auf, so dass thermische Brücken von der Tieftemperaturumgebung in einen angrenzenden Bereich bei erhöhter Temperatur (z. B. Raumtemperatur) vermieden werden. Weitere Vorteile der erfindungsgemäßen Kryospeichereinrichtung sind durch die elektromagnetische Unempfindlichkeit und Potentialfreiheit der Verbindung über die Lichtleitereinrichtung und die hohe Frequenzbandbreite bei geringer Dämpfung gegeben.

Vorrichtungsbezogen beruht die Erfindung gemäß einem zweiten Gesichtspunkt auf der allgemeinen technischen Lehre, eine Kryokonservierungsvorrichtung bereitzustellen, welche die erfindungsgemäße Kryospeichereinrichtung und einen Behälter umfasst, in dem die Kryospeichereinrichtung angeordnet ist, wobei die Lichtleitereinrichtung eine Verbindung zwischen einem Innenraum und einer Umgebung des Behälters bildet. Vorzugsweise stellt die Lichtleitereinrichtung die einzige Energie- und Datenverbindung zwischen der Kryospeichereinrichtung und weiteren Geräten, insbesondere mit einer Energieversorgungseinrichtung in der Umgebung des Behälters dar.

Verfahrensbezogen wird die genannte Aufgabe gemäß weiteren Gesichtspunkten durch ein Verfahren zum Betrieb der erfindungsgemäßen Kryospeichereinrichtung und ein Kryokonservierungsverfahren zum Betrieb der erfindungsgemäßen Kryokonservierungsvorrichtung gelöst.

Die erfindungsgemäße Kryospeichereinrichtung umfasst mindestens einen elektrischen Schaltkreis, der zum Betrieb in der Tieftemperaturumgebung, das heißt bei einer Temperatur unterhalb -100°C, vorzugsweise unterhalb -130°C ausgelegt ist. Die Kryospeichereinrichtung umfasst die Datenverarbeitungseinrichtung und mindestens einen Probendatenspeicher. Die Datenverarbeitungseinrichtung und der Probendatenspeicher können in einen einzigen Schaltkreis integriert sein. Allgemein sind jedoch eine Vielzahl von Probendatenspeichern mit einer oder mehreren Datenverarbeitungseinrichtungen in einem oder mehreren Schaltkreisen verbunden. Die opto-elektrische Wandlereinrichtung umfasst mindestens einen photovoltaischen Wandler, mit dem empfangenes Licht in einen elektrischen Strom konvertierbar ist. Erfindungsgemäß repräsentiert der elektrische Strom (Ausgangsstrom) der Wandlereinrichtung einen Signalstrom oder einen Ladestrom.

Erfindungsgemäß ist eine Energiespeichereinrichtung als Teil der Kryospeichereinrichtung in einer Tieftemperaturumgebung angeordnet. Die Energiespeichereinrichtung umfasst mindestens ein elektrisches Bauteil, mit dem elektrische Energie speicherbar ist (Energiespeicherelement). Die Energiespeichereinrichtung kann z. B. ein einziges Energiespeicherelement, das zur elektrischen Versorgung der Kryospeichereinrichtung vorgesehen ist, eine Vielzahl von Energiespeicherelementen, die jeweils einer Datenverarbeitungseinrichtung und/oder einem Probendatenspeicher zugeordnet und für deren elektrische Versorgung eingerichtet sind, oder eine Vielzahl von Energiespeicherelementen umfassen, welche in Teilen der Kryospeichereinrichtung verteilt integriert sind.

Die opto-elektrische Wandlereinrichtung kann erfindungsgemäß mehrere photovoltaische Wandler umfassen. Es hat sich als vorteilhaft erwiesen, wenn gemäß einer Ausführungsform der Erfindung mindestens ein photovoltaischer Wandler (Datenwandler), der mit der Datenverarbeitungseinrichtung verbunden ist, und mindestens ein weiterer photovoltaischer Wandler (Energie-Wandler) bereitgestellt wird, der mit der Energiespeichereinrichtung verbunden ist. Vorteilhafterweise können bei dieser Ausführungsform Lichtbeiträge zur Daten- und Energieübertragung gleichzeitig übermittelt werden. Die Daten- und Energiewandler können jeweils entsprechend mit der Datenverarbeitungseinrichtung und der Energiespeichereinrichtung fest verbunden sein. Eine abgewandelte Ausführungsform der Erfindung, bei der mindestens ein photovoltaischer Wandler (Daten/Energie-Wandler) zur Konvertierung von Lichtbeiträgen sowohl zu Signalströmen als auch zu Ladeströmen vorgesehen ist, kann wegen des vereinfachten Aufbaus der Kryospeichereinrichtung vorteilhaft sein. Der mindestens eine Daten/Energie-Wandler ist wahlweise mit der Datenverarbeitungseinrichtung oder der Energiespeichereinrichtung koppelbar.

Gemäß einer bevorzugten Ausführungsform der Erfindung ist eine Schalteinrichtung vorgesehen, über die der Daten/Energie-Wandler entweder mit der Datenverarbeitungseinrichtung oder der Energiespeichereinrichtung elektrisch verbunden werden kann. Mit der Schalteinrichtung kann zwischen einem ersten Zustand, in dem ein Signalstrom an die Datenverarbeitungseinrichtung geliefert wird, und einem zweiten Zustand umgeschaltet werden, in dem ein Ladestrom zu der Energiespeichereinrichtung geliefert wird. Es ist vorzugsweise eine elektrisch betätigbare Schalteinrichtung, besonders bevorzugt ein Schalttransistor, wie z. B. ein FET-Schalter vorgesehen, so dass durch ein elektrisches Schaltsignal die Funktion der Kombination der Lichtleitereinrichtung mit dem mindestens einen Daten/Energie-Wandler zwischen einer Datenübertragungsfunktion und einer Ladefunktion umschaltbar ist.

Vorteilhafterweise kann das Schaltsignal mit einer Energiesteuereinrichtung erzeugt werden, die Teil der erfindungsgemäßen Kryospeichereinrichtung und zum Betrieb in der Tieftemperaturumgebung eingerichtet ist. Die Energiesteuereinrichtung ist mit der Energiespeichereinrichtung verbunden und zu einer Erfassung eines Ladezustands der Energiespeichereinrichtung vorgesehen. In Abhängigkeit vom Ladezustand, z. B. bei Unterschreitung einer vorbestimmten Mindestladung wird das Schaltsignal erzeugt, mit dem die Schalteinrichtung den Daten/Energie-Wandler mit der Energiespeichereinrichtung verbindet. Vorteilhafterweise kann damit eine automatische Ladung der Energiespeichereinrichtung realisiert werden. Gleichzeitig kann mit dem Schaltsignal für die Dauer des Ladezustands des Daten/Energie-Wandlers die Datenkommunikation der Datenverarbeitungseinrichtung abgeschaltet werden.

Gemäß einer weiteren vorteilhaften Variante der Erfindung kann die opto-elektrische Wandlereinrichtung mehrere, parallel oder in Reihe geschaltete photovoltaische Wandler umfassen, die mit der Energiespeichereinrichtung koppelbar sind. Die Parallel- oder Reihenschaltung kann für eine vergrößerte Leistungseinkopplung in die erfindungsgemäße Kryospeichereinrichtung von Vorteil sein. Vorteilhafterweise kann die opto-elektrische Wandlereinrichtung des Weiteren mit einer Spannungsvervielfacherschaltung verbunden sein, um beispielsweise einen Zeitverlauf des Ladestroms zu beeinflussen. Es kann z. B. ein so genannter Chopper oder Zerhacker realisiert werden, um einen AC-Ladestrom zu erzeugen.

Gemäß einer alternativen Ausführungsform der Erfindung kann das Schaltsignal durch die Datenverarbeitungseinrichtung oder die Energiesteuereinrichtung in Abhängigkeit von einem vorbestimmten Übertragungsprotokoll erzeugt werden. Das Übertragungsprotokoll enthält einen Zeitplan, mit dem die Zeitpunkte des Umschaltens zwischen den Zuständen der Signalübertragung oder Energieversorgung festgelegt werden.

Vorteilhafterweise kann die erfindungsgemäß verwendete Lichtleitereinrichtung in verschiedenen Varianten ausgeführt sein, die an die konkreten Bedingungen des Betriebs der Kryospeichereinrichtung angepasst sind. Gemäß einer ersten Variante umfasst die Lichtleitereinrichtung mehrere Lichtleiter, die optisch mit dem mindestens einen photovoltaischen Wandler der opto-elektrischen Wandlereinrichtung gekoppelt sind. Vorteile ergeben sich in diesem Fall insbesondere bei der Verwendung einer Vielzahl von verteilt angeordneten photovoltaischen Wandlern. Gemäß einer zweiten, bevorzugten Variante umfasst die Lichtleitereinrichtung einen einzigen Lichtleiter, der mit dem mindestens einen photovoltaischen Wandler verbunden ist. In diesem Fall ergeben sich Vorteile durch eine Minimierung der Wärmebrücke, die durch die Lichtleitereinrichtung zwischen der Tieftemperaturumgebung der Kryospeichereinrichtung und der Umgebung höherer Temperatur gebildet wird. Gemäß besonders bevorzugten Ausführungsformen der Erfindung umfasst der mindestens eine Lichtleiter Multimodenfasern, welche den Vorteil bieten, dass die Energie- und Datenübertragung mit einem einzigen Lichtleiter vereinfacht wird.

Die thermische Wirkung der erfindungsgemäßen Verwendung der Lichtleitereinrichtung wird vorteilhafterweise verbessert, wenn Lichtleiter aus Quarzglasfasern oder Kunststofffasern (POF: Plastic Optical Fiber) verwendet werden. Quarzglas bietet eine Verminderung der Wärmeleitung im Vergleich zu metallischen Kupferleitern um den Faktor 300. POF's aus Polymethylmethacrylat bieten sogar eine Reduzierung der Wärmeleitung um den Faktor 1000.

Bei Verwendung eines einzigen Lichtleiters und einer Mehrzahl von photovoltaischen Wandlern, wie z. B. getrennten Daten- und Energiewandlern ist vorzugsweise ein Faserkoppler vorgesehen. Vorteilhafterweise wird damit die Ausrichtung von Lichtleiterenden in Bezug auf die photovoltaischen Wandler verbessert.

Der mindestens eine photovoltaische Wandler der opto-elektrischen Wandlereinrichtung umfasst allgemein ein lichtempfindliches Halbleiter-Bauelement. Besonders bevorzugt wird der Wandler durch eine Photodiode aus monokristallinem Silizium gebildet. In diesem Fall ergeben sich Vorteile aus dem hohen Wirkungsgrad der verfügbaren Silizium-Photodioden und aus der Integrierbarkeit in Halbleiterschaltungen auf Silizium-Basis, insbesondere in eine integrierte Schaltung der Datenverarbeitungseinrichtung.

Gemäß einer weiteren bevorzugten Variante der Erfindung ist die Kryospeichereinrichtung mit einer elektro-optischen Wandlereinrichtung ausgestattet, die zur Datenübertragung von der Datenverarbeitungseinrichtung in der Tieftemperaturumgebung zu einem Empfänger vorgesehen ist, der auch in der Tieftemperaturumgebung oder in einer benachbarten Umgebung erhöhter Temperatur, z. B. in einer externen Steuereinrichtung angeordnet ist.

Vorteilhafterweise wird durch die Kombination der opto-elektrischen Wandlereinrichtung mit der elektro-optischen Wandlereinrichtung die Funktionalität der Kryospeichereinrichtung erweitert. Es können über die Lichtleitereinrichtung zwei oder drei Übertragungskanäle realisiert werden, die Übertragungen von Signalen und Energie hin zu der Kryospeichereinrichtung und die Übertragung von Daten von der Kryospeichereinrichtung zu anderen Teilen in der Kryokonservierungsvorrichtung oder in deren Umgebung umfassen. Vorteilhafterweise können Lichtbeiträge, die jeweils einen der Übertragungskanäle repräsentieren, mit der Lichtleitereinrichtung gleichzeitig übertragen werden.

Die erfindungsgemäße Kryospeichereinrichtung kann ohne eine Verbindung mit Probenspeichern betrieben werden. Gemäß einer bevorzugten Ausführungsform der Erfindung ist die Kryospeichereinrichtung jedoch mit einer Probenspeichereinrichtung ausgestattet, die zur Aufnahme von biologischen Proben in der Tieftemperaturumgebung eingerichtet ist. Die Probenspeichereinrichtung umfasst eine Vielzahl von Probenspeicherelementen, die jeweils einem Datenspeicher der Kryospeichereinrichtung zugeordnet sind.

Die Kombination der Kryospeichereinrichtung mit der Probenspeichereinrichtung hat den besonderen Vorteil, dass über die Lichtleitereinrichtung ein spezifischer Zugriff auf Daten ermöglicht wird, die mit den einzelnen biologischen Proben gespeichert sind. Der selektive Zugriff auf die Probendaten kann gemäß einer ersten Variante unter Verwendung einer Datenkennung (Proben-ID) erfolgen. Vorteilhafterweise wird in diesem Fall der Aufbau der Kryospeichereinrichtung vereinfacht. Gemäß einer zweiten Variante wird jede einzelne Faser der Lichtleitereinrichtung zu einer anderen Probe geführt. In diesem Fall ist an jeder Probe ein zugehöriger photovoltaischer Wandler vorgesehen. Vorteilhafterweise kann bei dieser Variante ein zuverlässiger Zugriff auf Probendaten unabhängig von möglichen Übertragungsstörungen ohne eine Probenkennung erfolgen.

Gemäß einer weiteren vorteilhaften Variante der Erfindung ist die Kryospeichereinrichtung mit einer Kühleinrichtung kühlbar. Die Kühleinrichtung ist zur Einstellung der Temperatur der Tieftemperaturumgebung der Kryospeichereinrichtung vorgesehen. Allgemein kann jede Kühleinrichtung verwendet werden, mit der eine zur Kryokonservierung biologischer Proben ausreichende Temperatur gebildet werden kann. Vorzugsweise umfasst die Kühleinrichtung ein flüssiges Kühlmittel oder den Dampf des flüssigen Kühlmittels, wie z. B. flüssigen Stickstoff oder den Dampf des flüssigen Stickstoffs, wobei die Datenverarbeitungseinrichtung, die opto-elektrische Wandlereinrichtung und (optional) die elektro-optische Wandlereinrichtung im flüssigen Kühlmittel oder dessen Dampf angeordnet sind.

Weitere Einzelheiten und Vorteile der Erfindung werden im Folgenden unter Bezug auf bevorzugte Ausführungsformen und die beigefügten Zeichnungen erläutert. Es zeigen:
- Figur 1:: eine bevorzugte Ausführungsform der erfindungsgemäßen Kryokonservierungsvorrichtung, die mit der erfindungsgemäßen Kryospeichereinrichtung ausgestattet ist;
- Figuren 2 und 3:: verschiedene Anordnungen der erfindungsgemäß verwendeten photovoltaischen Wandler; und
- Figur 4:: weitere Einzelheiten einer bevorzugten Ausführungsform der erfindungsgemäßen Kryospeichereinrichtung.

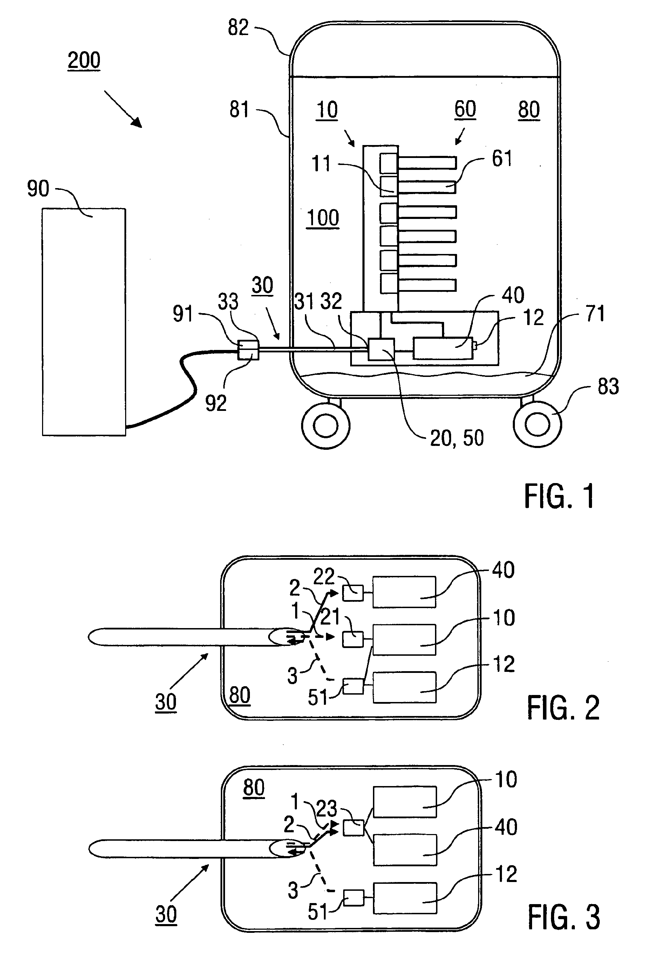

Die Kryospeichereinrichtung 100 umfasst gemäß der in Figur 1 schematisch illustrierten Ausführungsform der Erfindung eine Datenverarbeitungseinrichtung 10, opto-elektrische und elektro-optische Wandlereinrichtungen 20, 50, eine Lichtleitereinrichtung 30, eine Energiespeichereinrichtung 40 und eine Probenspeichereinrichtung 60. Zur Bereitstellung der erfindungsgemäßen Kryokonservierungsvorrichtung 200 sind die genannten Komponenten 10 bis 60 in einem Behälter 80 (Kryotank) mit einer Behälterwand 81 und einem vorzugsweise lösbaren Behälterdeckel 82 angeordnet. Der Behälter 80 ist allgemein mit einer Kühleinrichtung ausgestattet. Die Kühleinrichtung (nicht dargestellt) liefert z. B. flüssigen Stickstoff, der im Behälter 80 als Kühlmittel 71 angeordnet ist. Im Dampf des flüssigen Stickstoffs wird im Innenraum des Behälters 80 eine Tieftemperaturumgebung mit einer Temperatur im Bereich von - 130°C bis - 196°C gebildet. Der Behälter 80 ist ortsfest oder auf Rädern 83 beweglich in einer Kryobank angeordnet.

Die Kryospeichereinrichtung 100 ist über die Lichtleitereinrichtung 30 mit einer externen Steuereinrichtung 90 verbunden, die in einer Umgebung der Kryokonservierungsvorrichtung 200 bei erhöhter Temperatur (z. B. bei Raumtemperatur) angeordnet ist und z. B. einen Steuerrechner und eine Stromversorgung umfasst. Die Steuereinrichtung 90 enthält insbesondere Kontroll- und Überwachungseinrichtungen zum Betrieb der Kryokonservierungsvorrichtung 200.

Die Datenverarbeitungseinrichtung 10 ist mit Probendatenspeichern 11 und die Probenspeichereinrichtung 60 mit Probenspeichern 61 ausgestattet, wie dies aus der herkömmlichen Kryokonservierungstechnik bekannt ist. Die Zahl der Schaltkreise zur Bildung der Datenverarbeitungseinrichtung 10 und die Gestaltung und gegenseitige Anordnung der Probendatenspeicher 11 und Probenspeicher 61 sind in Abhängigkeit von den konkreten Anwendungsbedingungen gewählt. Die Probendatenspeicher 11 und Probenspeicher 61 können z. B. gestaltet und angeordnet sein, wie es in DE 100 60 889 A1 beschrieben ist. Die Eigenschaften des Behälters 80 und des Verfahrens zu dessen Betrieb werden ebenfalls gewählt, wie dies von der herkömmliche Kryokonservierungstechnik bekannt ist. Es ist mindestens eine Sensoreinrichtung 12 vorgesehen, mit der ein Betriebszustand der Kryokonservierungsvorrichtung 200, z. B. die Temperatur im Behälter 80 erfasst wird. Die Sensoreinrichtung 12 umfasst z. B. mindestens einen Temperatursensor.

Die Lichtleitereinrichtung 30 umfasst einen Lichtleiter 31, von dem ein erstes Ende 32 im Inneren des Behälters 80 und ein zweites Ende 33 außerhalb des Behälters 80 angeordnet ist. Der Lichtleiter 31 durchquert die Behälterwand 81 oder den Behälterdeckel 82. Das erste, innere Ende 32 ist optisch mit den Wandlern 21/22, 23, 51 der Wandlereinrichtungen 20, 50 gekoppelt (siehe Figuren 2, 3). Das zweite, äußere Ende 33 ist optisch mit einem opto-elektrischen Wandler 91 und einem elektro-optischen Wandler 92 der Steuereinrichtung 90 gekoppelt. Die optische Kopplung zwischen den Enden 32, 33 des Lichtleiters 31 mit den Wandlern wird in Abhängigkeit von den konkreten Anwendungsbedingungen gestaltet, wobei die an sich bekannten Techniken der Optoelektronik verwendet werden.

Der Lichtleiter 31 ist allgemein ein Wellenleiter aus einem dielektrischen, nicht-metallischen Material. Der Lichtleiter kann biegsam oder starr sein. Er umfasst z. B. optische Fasern aus Quarzglas oder Kunststoff oder eine optische Leiterplatte. Die Länge des Lichtleiters 31 ist z. B. im Bereich von 50 cm bis 200 cm gewählt. Der Lichtleiter 31 ist in der Behälterwand 81 oder dem Behälterdeckel 82 fixiert.

Mit der Erfindung wird vorteilhafterweise eine berührungslose Datenkommunikation und Energieversorgung der Kryospeichereinrichtung 100 ermöglicht. Der Betrieb der Kryokonservierungsvorrichtung 200 wird vereinfacht, da der berührungslose Betrieb realisiert wird, indem die Kryospeichereinrichtung 100 passend zum ersten Ende 32 des Lichtleiters 31 in den Behälter 80 eingesetzt und die Wandler 91, 92 relativ zum zweiten Ende 33 des Lichtleiters 31 ausgerichtet werden. Des Weiteren kann die Steuereinrichtung 90 zeitweilig von dem Behälter 80 getrennt werden. Beispielsweise kann in einer Kryobank eine mobile Steuereinrichtung 90 vorgesehen sein, um wahlweise auf verschiedene Behälter zuzugreifen.

Die Figuren 2 und 3 zeigen beispielhaft zwei Varianten von Übertragungskanälen 1, 2 und 3 zwischen dem Innenraum des Behälters 80 (Tieftemperaturumgebung) und der äußeren Umgebung. Gemäß Figur 2 umfasst die opto-elektrische Wandlereinrichtung einen Daten-Wandler 21 und einen Energie-Wandler 22. Die elektro-optische Wandlereinrichtung umfasst einen Daten-Wandler 51. Die Kryospeichereinrichtung im Behälter 80 umfasst die Datenverarbeitungseinrichtung 10, die Energiespeichereinrichtung 40 und eine Sensoreinrichtung 12.

Mit der Lichtleitereinrichtung 30 werden drei Übertragungskanäle gebildet, die einen Sendekanal 1, einen Energiekanal 2 und einen Empfangskanal 3 umfassen. Die Übertragungskanäle 1, 2 und 3 sind jeweils entsprechend den Wandlern 21, 22 und 51 zugeordnet. Über den Sendekanal 1 werden Daten zu der Datenverarbeitungseinrichtung 10, insbesondere zu den Probendatenspeichern 11 übermittelt. Die im Energiekanal 2 übertragenen Lichtbeiträge werden in einen Ladestrom konvertiert und zur Energiespeicherung verwendet. Über den Empfangskanal 3 werden Daten, wie z. B. ausgelesene Probendaten aus den Probendatenspeichern 11 oder Messdaten der Sensoreinrichtung 12 zu der externen Steuereinrichtung 90 (siehe Figur 1) übermittelt.

Gemäß Figur 3 umfasst die opto-elektrische Wandlereinrichtung einen Daten/Energie-Wandler 23, der für beide Übertragungskanäle 1 und 2, d.h. für die Übertragung von Daten und Lichtbeiträgen für die Energiespeicherung verwendet wird. Der Daten/Energie-Wandler 23 ist daher mit der Datenverarbeitungseinrichtung 10 und der Energiespeichereinrichtung 40 verbunden. Der Empfangskanal 3 wird wie in Figur 2 mit einem gesonderten elektro-optischen Wandler 51 gebildet.

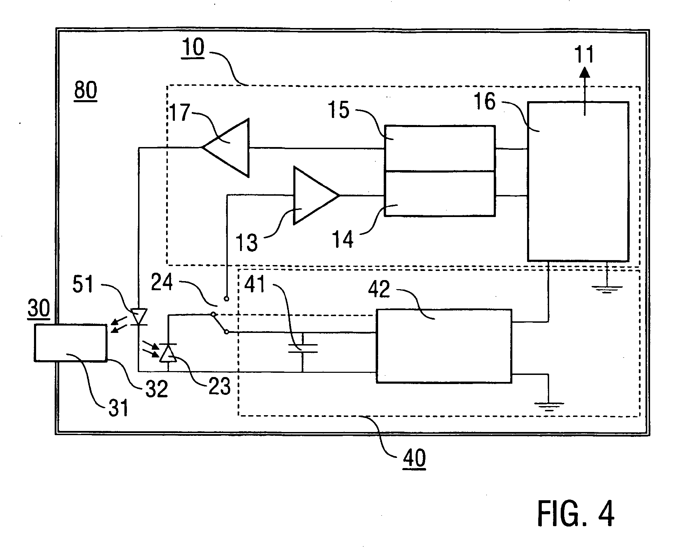

Weitere Einzelheiten des Übertragungsschemas gemäß Figur 3 sind in Figur 4 gezeigt. Das erste, innere Ende 32 des Lichtleiters 31 ist mit dem opto-elektrischen Daten/Energie-Wandler 23 und dem elektro-optischen Wandler 51 optisch gekoppelt. Der Daten/Ener-gie-Wandler 23 ist über die Schalteinrichtung 24 mit der Datenverarbeitungseinrichtung 10 oder der Energiespeichereinrichtung 40 verbunden. Die Datenverarbeitungseinrichtung 10 umfasst einen Empfänger-Verstärker 13, eine Datenrückgewinnungs-Schaltung 14, eine Datenformatierungs-Schaltung 15, eine Steuerschaltung (Mikrocontroller) 16 und eine Sende/Modulator-Schaltung 17. Die Steuerschaltung 16 ist mit den Probendatenspeichern 11 (Figur 1) verbunden. Die Energiespeichereinrichtung 40 umfasst ein kapazitives Energie-Speicherelement 41 und eine Energiesteuereinrichtung 42. Das Energie-Speicherelement 41 umfasst z. B. einen Kondensator. Die Kapazität des Kondensators ist insbesondere in Abhängigkeit von den Betriebsbedingungen, dem Strombedarf der Kryospeichereinrichtung und ggf. der Zahl der EnergieSpeicherelemente gewählt. Die Schalteinrichtung 24 umfasst z. B. einen FET-Transistor, mit dem der Ausgang des Daten/Energie-Wandlers 23 wählbar mit dem Energiespeicherelement 41 oder dem Empfangsverstärker 13 verbunden werden kann.

Die Energiesteuereinrichtung 42 ist dazu vorgesehen, mit der Schalteinrichtung 24 in Abhängigkeit vom Ladezustand des Energiespeicherelements 41 und/oder von einem Übertragungsprotokoll, das auf der Steuerschaltung 16 läuft, einen Datenempfangs- oder Lademodus zu aktivieren. Die Energiesteuereinrichtung 42 wird mit der Steuerschaltung 16 kontrolliert.

Wenn gemäß einer ersten Variante die Datenempfangs- und Lademodi nicht gleichzeitig realisiert werden sollen, werden die Lichtbeiträge zeitlich voneinander getrennt übertragen. Hierzu kann das mit der Steuerschaltung 16 realisierte Übertragungsprotokoll vorgesehen sein, mit dem zuerst bei Aktivierung des Datenempfangsmodus die Daten von der externen Steuereinrichtung 90 (Figur 1) zu der Datenverarbeitungseinrichtung 10 gesendet werden. Nach Abschluss der Datenverarbeitung sendet die Datenverarbeitungseinrichtung 10 über den elektro-optischen Wandler 51 ein Signal an die externe Steuereinrichtung 90. Damit ist die Datenübertragung beendet. Mit der Schalteinrichtung 24 wird dann auf den Lademodus umgeschaltet, in dem das Energie-Speicherelement 41 aufgeladen wird. Gleichzeitig werden über den Lichtleiter 31 Lichtbeiträge übertragen, die keine Daten repräsentieren, sondern ausschließlich der Aufladung des Energiespeicherelements 41 dienen. Hierzu wird ein Signal an die externe Steuereinrichtung 90 geschickt. Falls während des Datenempfangsmodus mit der Energiesteuereinrichtung 42 ein verminderter Ladezustand des Energiespeicherelements 41 erfasst wird, kann der Datenempfangsmodus unterbrochen und die Schalteinrichtung 24 in den Lademodus umgeschaltet werden.

Wenn gemäß einer weiteren Variante die Datenempfangs- und Lademodi gleichzeitig realisiert werden sollen, wird ein modenselektiv betriebener Daten/Energie-Wandler 23 verwendet. In diesem Fall könnte jeder Lichtbeitrag modenselektiv über einen einzigen Lichtleiter übertragen und empfangen werden.

Auf die Verwendung der Schalteinrichtung 24 kann verzichtet werden, wenn das Übertragungsschema gemäß Figur 2 realisiert wird. Vorteilhafterweise wird in diesem Fall mit einfachen Mitteln eine permanente, gleichzeitige Daten- und Energieeinkopplung in die Tieftemperaturumgebung ermöglicht.

Die in der vorstehenden Beschreibung, den Zeichnungen und den Ansprüche offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Kryospeichereinrichtung (100), die zur Speicherung von Probendaten in einer Tieftemperaturumgebung eingerichtet ist, umfassend:
- eine Datenverarbeitungseinrichtung (10), die zur Verarbeitung der Probendaten in der Tieftemperaturumgebung eingerichtet ist,
- eine opto-elektrische Wandlereinrichtung (20), die zum Betrieb in der Tieftemperaturumgebung vorgesehen ist, und
- eine Lichtleitereinrichtung (30) mit mindestens einem Lichtleiter (31), der zur Beleuchtung der opto-elektrischen Wandlereinrichtung (20) in der Tieftemperaturumgebung eingerichtet ist,
**gekennzeichnet durch**
- eine Energiespeichereinrichtung (40), die mit der opto-elektrischen Wandlereinrichtung (20) verbunden ist und mindestens ein Energiespeicherelement (41) enthält.

2. Kryospeichereinrichtung nach Anspruch 1, bei der die opto-elektrische Wandlereinrichtung (20) mindestens eines der Merkmale umfasst:
- die opto-elektrische Wandlereinrichtung (20) ist mit der Datenverarbeitungseinrichtung (10) verbunden,
- die opto-elektrische Wandlereinrichtung (20) umfasst mehrere, parallel geschaltete Energie-Wandler (22) oder Daten/Energie-Wandler (23),
- die opto-elektrische Wandlereinrichtung (20) umfasst mehrere, in Reihe geschaltete Energie-Wandler (22) oder Daten/Energie-Wandler (23), und
- die opto-elektrische Wandlereinrichtung (20) ist mit einer Spannungsvervielfacherschaltung verbunden.

3. Kryospeichereinrichtung nach Anspruch 1 oder 2, bei der
- die opto-elektrische Wandlereinrichtung (20) mindestens einen Daten-Wandler (21), der mit der Datenverarbeitungseinrichtung (10) verbunden ist, und mindestens einen Energie-Wandler (22) umfasst, der mit der Energiespeichereinrichtung (40) verbunden ist, oder
- die opto-elektrische Wandlereinrichtung (20) mindestens einen Daten/Energie-Wandler (23) umfasst, der mit der Datenverarbeitungseinrichtung (10) und der Energiespeichereinrichtung (40) verbunden ist.

4. Kryospeichereinrichtung nach Anspruch 3, bei der eine Schalteinrichtung (24) vorgesehen ist, die dazu eingerichtet ist, einen elektrischen Kontakt des mindestens einen Daten/Energie-Wandlers (23) mit der Datenverarbeitungseinrichtung (10) oder der Energiespeichereinrichtung (40) zu bilden.

5. Kryospeichereinrichtung nach Anspruch 4, bei der die Energiespeichereinrichtung (40) eine Energiesteuereinrichtung (42) enthält, die zur Steuerung der Schalteinrichtung (24) in Abhängigkeit von einem Ladezustand des Energiespeicherelements (41) eingerichtet ist.

6. Kryospeichereinrichtung nach mindestens einem der vorhergehenden Ansprüche, bei der
- die Lichtleitereinrichtung (30) mehrere Lichtleiter (31) umfasst, die mit den Daten- und Energie-Wandlern (21, 22) oder dem Daten/Energie-Wandler (23) gekoppelt sind, oder
- die Lichtleitereinrichtung (30) einen einzigen Lichtleiter (31) umfasst, der mit den Daten- und Energie-Wandlern (21, 22) oder dem Daten/Energie-Wandler (23) gekoppelt ist.

7. Kryospeichereinrichtung nach Anspruch 6, bei welcher der einzige Lichtleiter (31) Multimodefasern umfasst und/oder über einen Faserkoppler mit dem Daten- und Energie-Wandlern (21, 22) gekoppelt ist.

8. Kryospeichereinrichtung nach mindestens einem der vorhergehenden Ansprüche, bei der die Daten- und Energie-Wandler (21, 22) oder der Daten/Energie-Wandler (23) Photodioden aus monokristallinem Silizium umfassen.

9. Kryospeichereinrichtung nach mindestens einem der vorhergehenden Ansprüche, die:
- eine elektro-optische Wandlereinrichtung (50) umfasst, die mit der Datenverarbeitungseinrichtung (10) verbunden und zur Beleuchtung der Lichtleitereinrichtung (30) in der Tieftemperaturumgebung eingerichtet ist,
- eine Probenspeichereinrichtung (60) aufweist, die zur Aufnahme von Proben in der Tieftemperaturumgebung eingerichtet ist, und/oder
- eine Kühleinrichtung umfasst, die zur Kühlung der Datenverarbeitungseinrichtung (10) und der opto-elektrischen Wandlereinrichtung (20) eingerichtet ist.

10. Kryospeichereinrichtung nach Anspruch 9, bei der die Kühleinrichtung ein flüssiges Kühlmittel (71) oder Dampf des flüssigen Kühlmittels (71) umfasst und die Datenverarbeitungseinrichtung (10) und die opto-elektrische Wandlereinrichtung (20) in dem flüssigen Kühlmittel (71) oder im Dampf des flüssigen Kühlmittels (71) angeordnet ist.

11. Kryokonservierungsvorrichtung (200), die zur Kryokonservierung biologischer Proben und zur Speicherung von Probendaten in einer Tieftemperaturumgebung eingerichtet ist, die umfasst:
- eine Kryospeichereinrichtung (100) nach mindestens einem der vorhergehenden Ansprüche, und
- einen Behälter (80) mit einer thermisch isolierenden Behälterwand (81) und einem Behälterdeckel (82), wobei
- die Kryospeichereinrichtung (100) im Behälter (80) angeordnet ist, und
- der mindestens eine Lichtleiter (31) der Lichtleitereinrichtung (30) eine Verbindung von einem Innenraum des Behälters (80) durch die Behälterwand (81) oder den Behälterdeckel (82) in eine Umgebung des Behälters (80) bildet.

12. Verfahren zum Betrieb einer Kryospeichereinrichtung (100) mit einer Datenverarbeitungseinrichtung (10), einer opto-elektrischen Wandlereinrichtung (20), die mit der Datenverarbeitungseinrichtung (10) verbunden ist, und einer Lichtleitereinrichtung (30) mit mindestens einem Lichtleiter (31, 32), der zur Beleuchtung der opto-elektrischen Wandlereinrichtung (20) eingerichtet ist, wobei die Datenverarbeitungseinrichtung (10) und die opto-elektrische Wandlereinrichtung (20) in einer Tieftemperaturumgebung angeordnet sind, umfassend die Schritte:
- Übertragung von Probendaten über die Lichtleitereinrichtung (30) zu der Datenverarbeitungseinrichtung (10), und
- Verarbeitung der Probendaten mit der Datenverarbeitungseinrichtung (10),
**gekennzeichnet durch** die Schritte:
- Erzeugung eines Ladestroms mit der opto-elektrischen Wandlereinrichtung (20), und
- Ladung einer Energiespeichereinrichtung (40) mit dem Ladestrom.

13. Verfahren nach Anspruch 12, bei dem die opto-elektrische Wandlereinrichtung (20)
- mindestens einen Daten-Wandler (21) und mindestens einen Energie-Wandler (22) umfasst, wobei die Probendaten über den mindestens einen Daten-Wandler (21) zu der Datenverarbeitungseinrichtung (10) übertragen werden und der Ladestrom mit dem mindestens einen Energie-Wandler (22) erzeugt wird, oder
- mindestens einen Daten/Energie-Wandler (23) umfasst, wobei mit dem Daten/Energie-Wandler (23) die Probendaten zu der Datenverarbeitungseinrichtung (10) und der Ladestrom zu der Energiespeichereinrichtung (40) übertragen werden.

14. Verfahren nach Anspruch 13, bei dem der mindestens eine Daten/Energie-Wandler (23) über eine Schalteinrichtung (24) mit der Datenverarbeitungseinrichtung (10) oder der Energiespeichereinrichtung (40) verbunden wird.

15. Verfahren nach Anspruch 14, bei dem die Schalteinrichtung (24) in Abhängigkeit von einem Ladezustand der Energiespeichereinrichtung (40) und/oder von einem Übertragungsprotokoll betätigt wird.

16. Verfahren nach mindestens einem der Ansprüche 12 bis 15, bei dem der Ladestrom
- mit mehreren, parallel geschalteten Energie-Wandlern (22) oder Daten/Energie-Wandlern (23) erzeugt und zu der Energiespeichereinrichtung (40) übertragen wird, oder
- mit mehreren, in Reihe geschalteten Energie-Wandlern (22) oder Daten/Energie-Wandlern (23) erzeugt und zu der Energiespeichereinrichtung (40) übertragen wird.

17. Verfahren nach mindestens einem der Ansprüche 12 bis 16, bei dem
- die Lichtleitereinrichtung (30) einen einzigen Lichtleiter (32) umfasst, wobei Licht vom Lichtleiter (32) über einen Faserkoppler auf die Daten- und Energie-Wandler (21, 22) übertragen wird, und/oder
- eine Übertragung von Probendaten von der Datenverarbeitungseinrichtung (10) zu der Lichtleitereinrichtung (30) vorgesehen ist.

## Claims

1. A cryostorage device (100), which is adapted for storing sample data in a low temperature environment, comprising:
- a data processing device (10), which is adapted for processing the sample data in the low temperature environment,
- an opto-electrical converter device (20), which is provided for operation in the low temperature environment, and
- a light guide device (30) with at least one light guide (31), which is adapted for illuminating the opto-electrical converter device (20) in the low temperature environment,
**characterized by**
- an energy storage device (40), which is connected with the opto-electrical converter device (20) and contains at least one energy storage element (41).

2. The cryostorage device according to claim 1, wherein the opto-electrical converter device (20) comprises at least one of the following features:
- the opto-electrical converter device (20) is connected with the data processing device (10),
- the opto-electrical converter device (20) comprises a plurality of energy converters (22) or data/energy converters (23) connected in parallel,
- the opto-electrical converter device (20) comprises a plurality of energy converters (22) or data/energy converters (23) connected in series, and
- the opto-electrical converter device (20) is connected with a voltage multiplier circuit.

3. The cryostorage device according to claim 1 or 2, wherein
- the opto-electrical converter device (20) comprises at least one data converter (21), which is connected with the data processing device (10), and comprises at least one energy converter (22), which is connected with the energy storage device (40), or
- the opto-electrical converter device (20) comprises at least one data/energy converter (23), which is connected with the data processing device (10) and the energy storage device (40).

4. The cryostorage device according to claim 3, wherein a switching device (24) is provided, which is adapted to form an electric contact of the at least one data/energy converter (23) with the data processing device (10) or the energy storage device (40).

5. The cryostorage device according to claim 4, wherein the energy storage device (40) contains an energy control device (42), which is adapted for controlling the switching device (24) depending on a charging state of the energy storage element (41).

6. The cryostorage device according to at least one of the preceding claims, wherein
- the light guide device (30) comprises a plurality of light guides (31), which are coupled to the data and energy converters (21, 22) or the data/energy converter (23), or
- the light guide device (30) comprises one single light guide (31), which is coupled to the data and energy converter (21, 22) or the data/energy converter (23).

7. The cryostorage device according to claim 6, in which the single light guide (31) comprises multi-mode fibers and/or is coupled to the data and energy converter (21, 22) by means of a fiber coupler.

8. The cryostorage device according to at least one of the preceding claims, wherein the data and energy converter (21, 22) or the data/energy converter (23) comprise photodiodes made of monocrystalline silicon.

9. The cryostorage device according to at least one of the preceding claims, which
- comprises an electro-optical converter device (50), which is connected with the data processing device (10) and is adapted for illuminating the light guide device (30) in the low temperature environment,
- has a sample storage device (60), which is adapted for receiving samples in the low temperature environment, and/or
- comprises a cooling device, which is adapted for cooling the data processing device (10) and the opto-electrical converter device (20).

10. The cryostorage device according to claim 9, wherein the cooling device comprises a liquid coolant (71) or vapour of the liquid coolant (71) and the data processing device (10) and the opto-electrical converter device (20) are arranged in the liquid coolant (71) or in the vapour of the liquid coolant (71).

11. A cryopreservation apparatus (200), which is adapted for cryopreservation of biological samples and for storing sample data in a low temperature environment, comprising:
- a cryostorage device (100) according to at least one of the preceding claims, and
- a container (80) with a thermally insulating container wall (81) and a container lid (82), wherein
- the cryostorage device (100) is arranged in the container (80), and
- the at least one light guide (31) of the light guide device (30) forms a connection from an interior of the container (80) through the container wall (81) or the container lid (82) to an environment of the container (80).

12. A method for operating a cryostorage device (100) with a data processing device (10), an opto-electrical converter device (20), which is connected with the data processing device (10), and a light guide device (30) with at least one light guide (31, 32), which is adapted for illuminating the opto-electrical converter device (20), wherein the data processing device (10) and the opto-electrical converter device (20) are arranged in a low temperature environment, comprising the steps of:
- transmission of sample data by means of the light guide device (30) to the data processing device (10), and processing the sample data with the data processing device (10),
**characterized by** the steps of:
- generating a charging current with the opto-electrical converter device (20), and
- charging an energy storage device (40) with the charging current.

13. The method according to claim 12, wherein the opto-electrical converter device (20)
- comprises at least one data converter (21) and at least one energy converter (22), wherein the sample data is transmitted via the at least one data converter (21) to the data processing device (10) and the charging current is generated with the at least one energy converter (22), or
- comprises at least one data/energy converter (23), wherein the sample data are transmitted to the data processing device (10) and the charging current to the data/energy converter (23) with the energy storage device (40).

14. The method according to claim 13, wherein the at least one data/energy converter (23) is connected via a switching device (24) to the data processing device (10) or the energy storage device (40).

15. The method according to claim 14, wherein the switching device (24) is actuated depending on a charging state of the energy storage device (40) and/or on a transmission protocol.

16. The method according to at least one of claims 12 to 15, wherein the charging current
- is generated with a plurality of energy converters (22) or data/energy converters (23) connected in parallel, and is transmitted to the energy storage device (40), or
- is generated with a plurality of energy converters (22) or data/energy converters (23) connected in series, and is transmitted to the energy storage device (40).

17. The method according to at least one of claims 12 to 16, wherein
- the light guide device (30) comprises one single light guide (32), wherein light is transmitted from the light guide (32) via a fiber coupler to the data and energy converter (21, 22), and/or
- a transmission of sample data is provided for from the data processing device (10) to the light guide device (30).

## Revendications

1. Système de stockage cryogénique (100) qui est configuré pour stocker des données d'échantillons dans un environnement basse température, comprenant :
- un système de traitement des données (10) qui est configuré pour traiter les données d'échantillons dans l'environnement basse température ;
- un système de conversion (20) opto-électrique, qui est prévu aux fins du fonctionnement dans l'environnement basse température ; et
- un système de conduction optique (30) comprenant au moins un guide de lumière par fibres optiques (31), qui est configuré pour éclairer le système de conversion (20) opto-électrique dans l'environnement basse température,
**caractérisé par**
- un système de stockage d'énergie (40), qui est relié au système de conversion (20) opto-électrique et qui contient au moins un élément de stockage d'énergie (41).

2. Système de stockage cryogénique selon la revendication 1, dans le cadre duquel le système de conversion (20) opto-électrique comprend au moins une des caractéristiques suivantes :
- le système de conversion (20) opto-électrique est relié au système de traitement des données (10) ;
- le système de conversion (20) opto-électrique comprend plusieurs convertisseurs d'énergie (22) ou plusieurs convertisseurs d'énergie/données (23) montés en parallèle ;
- le système convertisseur (20) opto-électrique comprend plusieurs convertisseurs d'énergie (22) ou convertisseurs de données/d'énergie (23) branchés en série ; et
- le système convertisseur (20) opto-électrique est relié à un circuit multiplicateur de tension.

3. Système de stockage cryogénique selon la revendication 1 ou 2, dans le cadre duquel :
- le système convertisseur (20) opto-électrique comprend au moins un convertisseur de données (21), qui est relié au système de traitement de données (10), et au moins un convertisseur d'énergie (22), qui est relié au système de stockage d'énergie (40) ; ou
- le système convertisseur (20) opto-électrique comprend au moins un convertisseur de données/d'énergie (23), qui est relié au système de traitement de données (10) et au système de stockage d'énergie (40).

4. Système de stockage cryogénique selon la revendication 3, dans le cadre duquel un système de commutation (24) est prévu, lequel est configuré pour établir un contact électrique entre le convertisseur de données/d'énergie (23) au moins au nombre de un et le système de traitement de données (10) ou le système de stockage d'énergie (40).

5. Système de stockage cryogénique selon la revendication 4, dans le cadre duquel le système de stockage d'énergie (40) contient un système de commande d'énergie (42), qui est configuré pour commander le système de commutation (24) en fonction d'un état de charge de l'élément de stockage d'énergie (41).

6. Système de stockage cryogénique selon au moins l'une quelconque des revendications précédentes, dans le cadre duquel
- le système de conduction optique (30) comprend plusieurs guides de lumière par fibres optiques (31), qui sont couplés aux convertisseurs de données et d'énergie (21, 22) ou au convertisseur de données/d'énergie (23), ou
- le système de conduction optique (30) comprend un seul guide de lumière par fibres optiques (31), qui est couplé aux convertisseurs de données et d'énergie (21, 22) ou au convertisseur de données/d'énergie (23).

7. Système de stockage cryogénique selon la revendication 6, dans le cadre duquel l'unique guide de lumière par fibres optiques (31) comprend des fibres multimodes et/ou est couplé par l'intermédiaire d'un coupleur à fibre aux convertisseurs de données et d'énergie (21, 22).

8. Système de stockage cryogénique selon au moins l'une quelconque des revendications précédentes, dans le cadre duquel les convertisseurs de données et d'énergie (21, 22) ou le convertisseur de données/d'énergie (23) comprennent des photodiodes composées de silicium monocristallin.

9. Système de stockage cryogénique selon au moins l'une quelconque des revendications précédentes, qui
- comprend un système de conversion (50) électro-optique, qui est relié au système de traitement des données (10) et qui est configuré pour éclairer le système de conduction optique (30) dans l'environnement basse température,
- présente un système de stockage d'échantillons (60), qui est configuré pour recevoir des échantillons dans l'environnement basse température, et/ou
- comprend un système de refroidissement, qui est configuré pour refroidir le système de traitement de données (10) et le dispositif de conversion (20) opto-électrique.

10. Système de stockage cryogénique selon la revendication 9, dans le cadre duquel le système de refroidissement comprend un réfrigérant (71) liquide ou de la vapeur du réfrigérant (71) liquide, et en ce que le système de traitement de données (10) et le système de conversion (20) opto-électrique sont disposés dans le réfrigérant (71) liquide ou dans la vapeur du réfrigérant liquide (71).

11. Dispositif de conservation cryogénique (200), qui est configuré pour la conservation cryogénique d'échantillons biologiques et pour le stockage de données d'échantillons dans un environnement basse température, lequel comprend :
- un système de stockage cryogénique (100) selon au moins l'une quelconque des revendications précédentes, et
- un contenant (80) doté d'une paroi de contenant (81) isolante thermiquement et d'un couvercle de contenant (82), sachant
- que le système de stockage cryogénique (100) est disposé dans le contenant (80), et
- que le guide de lumière par fibres optiques (31) au moins au nombre de un du système de conduction optique (30) forme une liaison entre l'espace intérieur du contenant (80) et un environnement du contenant (80) en passant par la paroi du contenant (81) ou le couvercle (82) du contenant.

12. Procédé servant à faire fonctionner un système de stockage cryogénique (100) comprenant un système de traitement de données (10), un système de conversion (20) opto-électrique, qui est relié au système de traitement de données (10), et un système de conduction optique (30) doté au moins d'un guide de lumière par fibres optiques (31, 32), qui est configuré pour éclairer le système de conversion (20) opto-électrique, sachant que le système de traitement de données (10) et le système de conversion (20) opto-électrique sont disposés dans un environnement basse température, ledit procédé comprenant les étapes suivantes consistant à :
- transmettre les données d'échantillons au système de traitement de données (10) par l'intermédiaire du système de conduction optique (30), et
- traiter les données d'échantillons à l'aide du système de traitement de données (10),
**caractérisé par** les étapes suivantes consistant à :
- produire un courant de charge à l'aide du système de conversion (20) opto-électrique, et
- charger un système de stockage d'énergie (40) à l'aide du courant de charge.

13. Procédé selon la revendication 12, dans le cadre duquel le système de conversion (20) opto-électrique comprend
- au moins un convertisseur de données (21) et au moins un convertisseur d'énergie (22), sachant que les données d'échantillons sont transmises par l'intermédiaire du convertisseur de données (21) au moins au nombre de un vers le système de traitement de données (10) et sachant que le courant de charge est généré à l'aide du convertisseur d'énergie (22) au moins au nombre de un, ou
- au moins un convertisseur de données/d'énergie (23), sachant que le convertisseur de données/d'énergie (23) permet de transmettre les données d'échantillons au système de traitement des données (10) et le courant de charge au système de stockage d'énergie (40).

14. Procédé selon la revendication 13, dans le cadre duquel le convertisseur de données/d'énergie (23) au moins au nombre de un est relié au système de traitement de données (10) ou au système de stockage d'énergie (40) par l'intermédiaire d'un système de commutation (24).

15. Procédé selon la revendication 14, dans le cadre duquel le système de commutation (24) est actionné en fonction d'un état de charge du système de stockage d'énergie (40) et/ou en fonction d'un protocole de transfert.

16. Procédé selon au moins l'une quelconque des revendications 12 à 15, dans le cadre duquel le courant de charge
- est généré à l'aide de plusieurs convertisseurs d'énergie (22) ou convertisseurs de données/d'énergie (23) montés en parallèle et est transmis au système de stockage d'énergie (40), ou
- est généré à l'aide de plusieurs convertisseurs d'énergie (22) ou convertisseurs de données/d'énergie (23) branchés en série et est transmis au système de stockage d'énergie (40).

17. Procédé selon au moins l'une quelconque des revendications 12 à 16, dans le cadre duquel
- le système de conduction optique (30) comprend un seul guide de lumière par fibres optiques (32), sachant que la lumière est transmise du guide de lumière par fibres optiques (32) aux convertisseurs de données et d'énergie (21, 22) par l'intermédiaire d'un coupleur à fibre optique, et/ou
- un transfert des données d'échantillons est prévu du système de traitement de données (10) au système de conduction optique (30).
